# FASCICULE DE BREVET EUROPEEN

(11) **EP 2 893 712 B1**
(45) Date de publication et mention de la délivrance du brevet: **31.08.2016**
(21) Numéro de dépôt: 13766615.2
(22) Date de dépôt: 03.09.2013
(51) Int. Cl.: H04Q 9/00, H04L 5/00

(54) **PROCEDES D'EMISSION ET DE RECEPTION DE DONNEES DANS UN SYSTEME DE TELECOMMUNICATIONS NUMERIQUES**
VERFAHREN ZUM SENDEN UND EMPFANGEN VON DATEN IN EINEM DIGITALEN TELEKOMMUNIKATIONSSYSTEM
METHODS FOR TRANSMITTING AND RECEIVING DATA IN A DIGITAL TELECOMMUNICATIONS SYSTEM

(30) Priorité: 04.09.2012 FR 1258213
(43) Date de publication de la demande: 15.07.2015
(73) Titulaire: SIGFOX, 31670 Labège (FR)
(72) Inventeur: SELLIER, Laurence, F-31000 Toulouse (FR); FOURTET, Christophe, F-82170 Pompignan (FR)
(74) Mandataire: Ipside
(86) Numéro de dépôt international: PCT/FR2013/052029
(87) Numéro de publication internationale: WO 2014/037665

(56) Documents cités:
- US-A1- 2005 176 371

## Description

### DOMAINE TECHNIQUE

La présente invention appartient au domaine des télécommunications numériques, et concerne plus particulièrement un procédé d'émission de données d'un terminal à une station d'un système de télécommunications numériques, ainsi qu'un procédé correspondant de réception des données émises par ledit terminal.

### ÉTAT DE LA TECHNIQUE

Le document général de l'état de l'art US2005/0176371 décrit l'utilisation de motifs de sauts de fréquences afin de transmettre des données d'un terminal à une station.

La présente invention trouve une application particulièrement avantageuse, bien que nullement limitative, dans les systèmes de télécommunications à bande étroite. Par « bande étroite », on entend que le spectre fréquentiel instantané des signaux radioélectriques émis par un terminal est de largeur fréquentielle inférieure au kilohertz.

De tels systèmes de télécommunications à bande étroite sont par exemple mis en oeuvre dans les réseaux de capteurs, dans lesquels des capteurs émettent de façon récurrente des données représentatives de mesures d'une grandeur physique à destination d'une station de collecte de données. On peut citer, à titre d'exemple nullement limitatif, des capteurs embarqués dans des compteurs électriques ou gaz, qui émettraient des données relatives à la consommation électrique ou en gaz à une station de collecte en vue d'établir la facturation associée à cette consommation.

De manière connue, on distingue généralement les données utiles des données de contrôle. Les données utiles correspondent par exemple aux mesures de la grandeur physique, tandis que les données de contrôle correspondent à des informations permettant d'interpréter lesdites données utiles (code d'identification du terminal ayant émis les données utiles, format de transmission utilisé, quantité de données utiles, etc.).

Dans le cas d'un réseau de capteurs, d'autres types de données utiles peuvent être émises, comme par exemple des données relatives à l'état de charge d'un accumulateur électrique d'un capteur. De telles données utiles nécessitent un débit moindre que celui requis pour les mesures de grandeur physique, mais doivent également être accompagnées de données de contrôle. La transmission de ce type de données utiles entraîne une utilisation peu efficace du canal de transmission puisque le rapport entre la quantité de données utiles et la quantité de données de contrôle est alors faible.

### EXPOSÉ DE L'INVENTION

La présente invention a pour objectif de remédier à tout ou partie des limitations des solutions de l'art antérieur, notamment celles exposées ci-avant, en proposant une solution qui permette, à largeur fréquentielle constante du spectre fréquentiel instantané des signaux radioélectriques émis par un terminal, d'augmenter le débit maximal des données.

En outre, la présente invention a également pour objectif de proposer une solution qui permette de multiplexer un premier flux de données et un second flux de données requérant un débit inférieur à celui requis par le premier flux de données, sans que lesdits premier et second flux de données ne se perturbent, et de préférence sans augmenter la quantité de données de contrôle à émettre.

En outre, la présente invention a également pour objectif de proposer une solution qui permette d'émettre des données du second flux de données « à la volée », sans avoir à informer préalablement la station de la présence ou non dudit second flux de données.

A cet effet, et selon un premier aspect, l'invention concerne un procédé d'émission de données par un terminal à destination d'une station d'un système de télécommunications numériques, dans lequel un premier flux de données est encodé dans des paquets de données et un second flux de données est encodé dans un motif de saut de fréquence, lesdits paquets de données, dans lesquels est encodé le premier flux de données, étant émis successivement dans des bandes fréquentielles respectives d'une ressource fréquentielle, lesdites bandes fréquentielles étant déterminées en fonction dudit motif de saut de fréquence dans lequel est encodé le second flux de données.

Ainsi, le premier flux de données est émis de manière conventionnelle, sous la forme de paquets de données, lesquels sont émis dans des bandes fréquentielles choisies en fonction du second flux de données. On comprend donc que la largeur fréquentielle du spectre fréquentiel instantané des signaux radioélectriques émis par le terminal, déterminée par les paquets de données, est inchangée alors que le débit maximal est augmenté par l'émission simultanée du second flux de données encodé dans le motif de saut de fréquence utilisé. Le débit maximal du second flux de données est a priori inférieur à celui du premier flux de données, puisqu'au plus un symbole du second flux de données peut être émis simultanément à un paquet de données, alors que chaque paquet de données comportera généralement plusieurs symboles du premier flux de données.

L'émission du second flux de données étant étroitement liée à l'émission du premier flux de données, il est possible de n'émettre qu'une fois des données de contrôle communes aux deux flux de données. Par exemple, un code d'identification du terminal émettant le premier flux de données et le second flux de données est incorporé dans chaque paquet de données dans lequel est encodé le premier flux de données.

Cette augmentation du débit maximal à largeur fréquentielle constante du spectre fréquentiel instantané est obtenue au détriment des traitements à effectuer par la station dans la mesure où celle-ci ne connaît plus, a priori, le motif de saut de fréquence utilisé par le terminal pour émettre les paquets de données. La station doit donc rechercher, dans la ressource fréquentielle, dans quelles bandes fréquentielles le terminal a émis les paquets de données, avant d'extraire à la fois le premier flux de données et le second flux de données.

Du fait que la station doit rechercher par défaut dans quelles bandes fréquentielles le terminal a émis les paquets de données, il n'est pas nécessaire d'informer ladite station de la présence ou non de données du second flux de données.

Dans des modes particuliers de mise en oeuvre, le procédé d'émission peut comporter en outre l'une ou plusieurs des caractéristiques suivantes, prises isolément ou selon toutes les combinaisons techniquement possibles.

Dans un mode particulier de mise en oeuvre, un motif de saut de fréquence théorique étant préalablement associé au terminal, le second flux de données est encodé sous la forme d'une modification dudit motif de saut de fréquence théorique.

De telles dispositions, selon lesquelles le second flux de données est encodé dans le motif de saut de fréquence utilisé de manière relative à un motif de saut de fréquence théorique, permettent de bénéficier des avantages du saut de fréquence, notamment en termes de diversité fréquentielle, même lorsqu'aucune donnée du second flux de données n'est émise. En effet, la station, qui connaît ou sait déterminer le motif de saut de fréquence théorique préalablement associé au terminal, pourra par comparaison avec le motif de saut de fréquence réellement utilisé par le terminal déterminer si des données du second flux de données ont été émises et, le cas échéant, extraire le second flux de données.

Dans un mode particulier de mise en oeuvre, la modification du motif de saut de fréquence théorique, pour encoder le second flux de données, comprend la modification ou la suppression d'au moins un saut de fréquence théorique dudit motif de saut de fréquence théorique.

Dans un mode particulier de mise en oeuvre, seuls des sauts de fréquence théoriques correspondant à des indices prédéfinis du motif de saut de fréquence théorique sont modifiés ou supprimés pour encoder le second flux de données.

Dans un mode particulier de mise en oeuvre, la modification des sauts de fréquence peut donner des ensembles de fréquences séparées de sauts particulièrement réduits, de l'ordre de quelques millièmes de ppm (parties par million) à quelques dixièmes de ppm, soit quelques Hertz à quelques centaines de Hertz. L'évolution fréquentielle peut ainsi s'assimiler à une évolution quasi continue. Dans ce cas, le traitement pour extraire les informations codées dans le second flux de données peut s'apparenter à un traitement de "reconnaissance de forme", consistant à analyser l'évolution fréquentielle qui est ainsi quasi-analogique.

Selon un second aspect, l'invention concerne un terminal d'un système de télécommunications numériques comportant des moyens configurés pour émettre des données à destination d'une station conformément à un procédé d'émission selon l'invention.

Selon un troisième aspect, l'invention concerne un procédé de réception, par une station d'un système de télécommunications numériques, de données émises conformément à l'invention par un terminal, ledit procédé de réception comportant des étapes de :
- recherche, dans la ressource fréquentielle, de paquets de données émis par le terminal,
- extraction du premier flux de données à partir des paquets de données détectés,
- mesure des bandes fréquentielles dans lesquelles des paquets de données ont été détectés,
- extraction du second flux de données en fonction des mesures des bandes fréquentielles dans lesquelles des paquets de données ont été détectés.

Tel qu'indiqué précédemment, la station doit rechercher dans quelles bandes fréquentielles le terminal a émis des paquets de données, mesurer les bandes fréquentielles dans lesquelles des paquets de données ont été détectés et ainsi estimer le motif de saut de fréquence utilisé par le terminal.

Une telle recherche des paquets de données dans une ressource fréquentielle est déjà effectuée dans certains systèmes de télécommunications numériques. C'est le cas par exemple dans le système de télécommunications numériques décrit dans la demande internationale WO 2011/154466, dans lequel la dérive fréquentielle des moyens de synthèse fréquentielle des terminaux est supérieure à la largeur fréquentielle du spectre fréquentiel instantané des signaux radioélectriques émis par lesdits terminaux.

Une telle recherche des paquets de données dans une ressource fréquentielle s'accommode avantageusement d'une architecture radio du type « radio logicielle » (connue sous le nom de « Software Defined Radio » ou SDR dans la littérature anglo-saxonne).

Dans des modes particuliers de mise en oeuvre, le procédé de réception peut comporter en outre l'une ou plusieurs des caractéristiques suivantes, prises isolément ou selon toutes les combinaisons techniquement possibles.

Dans un mode particulier de mise en oeuvre, l'étape d'extraction du second flux de données comporte la comparaison des mesures des bandes fréquentielles dans lesquelles des paquets de données ont été détectés à un motif de saut de fréquence théorique associé audit terminal.

Dans un mode particulier de mise en oeuvre, les paquets de données incorporant un compteur incrémenté par le terminal à chaque nouvelle émission, le second flux de données est extrait en outre en fonction des compteurs desdits paquets de données.

De telles dispositions permettent notamment de déterminer, au niveau de la station, si des paquets de données ont été perdus, et donc d'améliorer l'extraction du second flux de données en tenant compte le cas échéant des paquets de données perdus.

Alternativement ou en complément, les paquets de données peuvent comporter une partie chiffrée au moyen d'une clé tournante incrémentée par le terminal à chaque nouvelle émission, le second flux de données étant alors extrait en outre en fonction des clés tournantes utilisées pour chiffrer lesdits paquets de données.

Selon un quatrième aspect, l'invention concerne une station d'un système de télécommunications numériques comportant des moyens configurés pour recevoir des données d'un terminal conformément à un procédé de réception selon l'invention.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un système de télécommunications numériques,
- Figure 2 : un diagramme illustrant les principales étapes d'un exemple de mise en oeuvre d'un procédé d'émission de données.
- Figure 3 : un diagramme illustrant les principales étapes d'un exemple de mise en oeuvre d'un procédé de réception de données.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

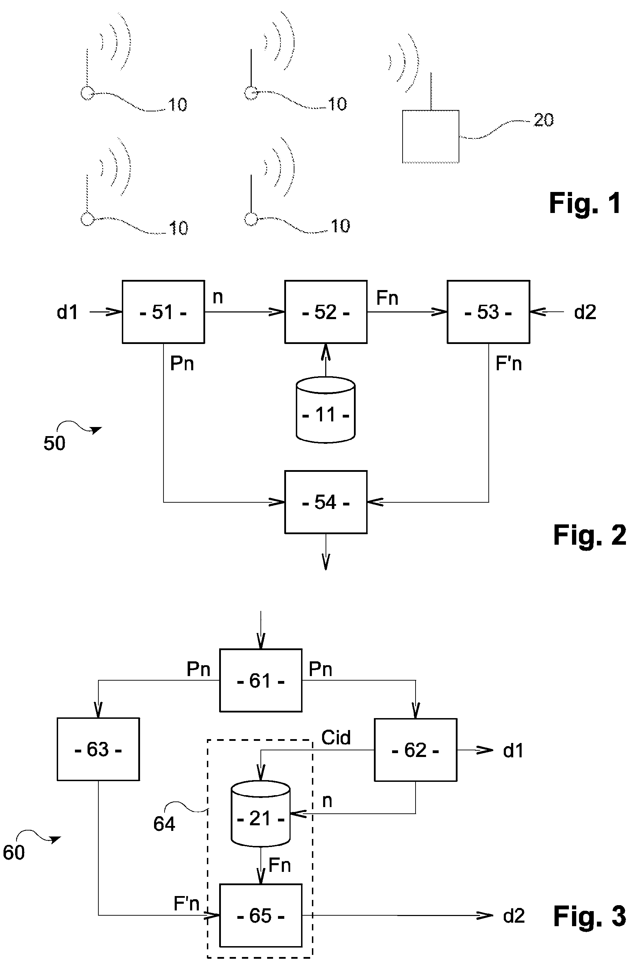

La figure 1 représente un système de télécommunications numériques comprenant plusieurs terminaux 10 et une station 20.

Dans le contexte de l'invention, on entend de manière générale par « station » tout dispositif récepteur adapté à recevoir des paquets de données sous la forme de signaux radioélectriques. La station 20 est par exemple l'un quelconque des terminaux 10, ou un dispositif particulier tel qu'un point d'accès à un réseau filaire ou non filaire de télécommunications.

On entend par « signal radioélectrique » une onde électromagnétique se propageant via des moyens non filaires, dont les fréquences sont comprises dans le spectre traditionnel des ondes radioélectriques (quelques hertz à plusieurs centaines de gigahertz) ou dans des bandes de fréquences voisines.

La présente invention concerne tout d'abord un procédé 50 d'émission de données par un terminal 10 à destination de la station 20.

De manière générale, un procédé 50 d'émission selon l'invention permet l'émission simultanée de deux flux de données.

Un premier flux de données est encodé sous la forme de paquets de données. Les paquets de données sont formés de manière conventionnelle, par exemple en exécutant des étapes successives de codage de canal (au moyen d'un code correcteur d'erreurs tel qu'un code à répétition, un code convolutif, un turbo-code, etc.) et de modulation (de sorte à obtenir des symboles tels que des symboles BPSK, DBPSK, QPSK, 16QAM, etc.).

Une fois mis en forme, chaque paquet de données est translaté en fréquences pour être émis sous la forme d'un signal radioélectrique dans une bande fréquentielle d'une ressource fréquentielle, dite « bande de multiplexage », partagée entre les terminaux 10.

Chaque bande fréquentielle est par exemple définie par la fréquence centrale autour de laquelle un paquet de données est translaté, la largeur fréquentielle ΔB du spectre fréquentiel instantané du signal radioélectrique correspondant étant déterminée par le paquet de données émis.

Un second flux de données est encodé sous la forme d'un motif de saut de fréquence utilisé par le terminal 10 pour choisir les bandes fréquentielles dans lesquelles il émet les paquets de données formés à partir du premier flux de données. Ainsi, le motif de saut de fréquence, formé à partir du second flux de données, détermine la séquence des fréquences centrales successives des bandes fréquentielles dans lesquelles les paquets de données du premier flux de données sont successivement émis.

Il est à noter que le premier flux de données et le second flux de données peuvent être de tout type, données utiles et/ou données de contrôle.

De nombreuses combinaisons sont possibles. Suivant un exemple, le second flux de données est constitué de données de contrôle associées à des données utiles du premier flux de données. Suivant un autre exemple, le second flux de données comporte des données utiles décorrélées des données utiles du premier flux de données. Suivant un autre exemple, le second flux de données comporte des données utiles corrélées avec les données utiles du premier flux de données, par exemple une copie d'une partie des données utiles du premier flux de données émises également dans le second flux de données à des fins de redondance, etc.

Dans le cas où le premier flux de données et le second flux de données comportent tous deux des données utiles, les données de contrôle communes auxdits premier et second flux de données, comme par exemple un code d'identification du terminal 10 qui les émet, ne sont préférentiellement émises que dans l'un desdits premier et second flux de données. Dans le cas où un code d'identification du terminal 10 est émis, il est par exemple inclus uniquement dans le premier flux de données, et est par conséquent encodé uniquement dans les paquets de données.

Chaque terminal 10 du système de télécommunications numériques comporte un ensemble de moyens logiciels et/ou matériels configurés pour émettre des données, à destination de la station 20, conformément à un procédé 50 d'émission dont le principe général a été décrit ci-avant.

Dans un mode préféré de réalisation, lesdits moyens, configurés pour émettre des données conformément à un procédé 50 d'émission dont le principe général a été décrit ci-avant, se présentent sous la forme d'un module d'émission numérique et d'un module d'émission analogique.

Le module d'émission numérique est adapté à former les paquets de données à partir du premier flux de données et à former un motif de saut de fréquence à partir du second flux de données. Il comporte par exemple un processeur et une mémoire électronique dans laquelle est mémorisé un produit programme d'ordinateur, sous la forme d'un ensemble d'instructions de code de programme qui, lorsqu'elles sont exécutées par le processeur, mettent en oeuvre tout ou partie des étapes de formation des paquets de données et de formation du motif de saut de fréquence. Dans une variante, le module d'émission numérique comporte des circuits logiques programmables, de type FPGA, PLD, etc., et/ou circuits intégrés spécialisés (ASIC), adaptés à mettre en oeuvre tout ou partie desdites étapes de formation des paquets de données et de formation du motif de saut de fréquence.

Le module d'émission numérique comporte également un ou plusieurs convertisseurs numérique/analogique (N/A) adaptés à former un ou des signaux analogiques à partir des paquets de données.

Le module d'émission analogique est adapté à former, à partir desdits signaux analogiques reçus du module d'émission numérique, les signaux radioélectriques émis. En particulier, chaque module d'émission analogique translate fréquentiellement les signaux analogiques pour que ceux-ci soient émis dans la bande de multiplexage, dans les bandes fréquentielles prévues par le motif de saut de fréquence formé à partir du second flux de données. Il est à noter qu'une partie desdites translations fréquentielles peut être effectuée par le module d'émission numérique, en bande de base et/ou sur fréquence intermédiaire, la translation finale dans la bande de multiplexage étant effectuée par le module d'émission analogique. En variante, le module d'émission analogique peut effectuer l'ensemble des translations fréquentielles en fonction de signaux de commande, représentatifs du motif de saut de fréquence, reçus du module d'émission numérique.

Le module d'émission analogique peut se présenter sous toute forme conventionnelle adaptée, et comporte à cet effet un ensemble de moyens considérés comme connus de l'homme de l'art (antennes, filtres analogiques, amplificateurs, oscillateurs locaux, mélangeurs, etc.).

La figure 2 représente un mode préféré de mise en oeuvre d'un procédé 50 d'émission dont le principe général a été décrit ci-avant, pour l'émission d'un premier flux de données d1 et d'un second flux de données d2.

Dans l'exemple illustré par la figure 2, on se place de manière non limitative dans le cas où un motif de saut de fréquence théorique est préalablement associé au terminal 10.

C'est par exemple le cas si le terminal 10 utilise toujours le même motif de saut de fréquence pour émettre les paquets de données, où si un motif de saut de fréquence a préalablement été négocié avec la station 20.

Le motif de saut de fréquence théorique est mémorisé dans une mémoire électronique 11 du terminal 10, par exemple sous la forme d'une séquence S = {F1, F2, ... FN} de N fréquences centrales Fn, 1 ≤ n ≤ N à utiliser pour l'émission des paquets de données dans la bande de multiplexage. Ainsi, si un paquet de données est émis autour de la fréquence centrale F1, le paquet de données suivant est émis autour de la fréquence centrale F2, le paquet de données suivant est émis autour de la fréquence centrale F3, etc. Si un paquet de données est émis autour de la fréquence centrale FN, le paquet de données suivant est émis autour de la fréquence centrale F1, etc.

Il est à noter que d'autres formats sont possibles pour le motif de saut de fréquence théorique, et que le choix d'un format particulier ne constitue qu'une variante d'implémentation de l'invention. Suivant un autre exemple non limitatif, le motif de saut de fréquence théorique peut être mémorisé sous la forme d'une séquence S = {ΔF1, ΔF2, ... ΔFN} de N sauts de fréquence ΔFn, 1 ≤ n ≤ N à utiliser pour passer d'une fréquence centrale à la suivante.

Tel qu'illustré par la figure 2, le procédé 50 d'émission comporte une étape 51 de formation, à partir du premier flux de données d1, d'un paquet de données Pn, 1 ≤ n ≤ N.

Le procédé 50 d'émission comporte en outre une étape 52 de détermination, à partir du motif de saut de fréquence théorique mémorisé dans la mémoire électronique 11, du saut de fréquence théorique à effectuer pour émettre ledit paquet de données Pn. Pour l'indice n dudit paquet de données Pn, le saut de fréquence théorique consiste en une translation fréquentielle autour de la fréquence centrale Fn.

Dans le mode particulier de mise en oeuvre illustré par la figure 2, le second flux de données d2 est encodé sous la forme d'une modification dudit motif de saut de fréquence théorique, au cours d'une étape 53 de formation du motif de saut de fréquence à utiliser. Plus particulièrement, une modification δFn est calculée en fonction dudit second flux de données d2 de sorte à obtenir une nouvelle fréquence centrale F'n = Fn + δFn.

Il est à noter que divers traitements peuvent être appliqués au second flux de données d2. Il est notamment possible de lui appliquer un codage de canal. Ensuite, la modification δFn à apporter est par exemple choisie parmi plusieurs modifications prédéfinies possibles. Le nombre M de modifications δm 1 ≤ m ≤ M) prédéfinies possibles va déterminer la quantité de données du second flux de données d2 émises à chaque modification du motif de saut de fréquence théorique.

Par exemple, en considérant quatre modifications δ1, δ2, δ3, δ4 prédéfinies possibles et un second flux de données d2 se présentant sous la forme d'un flux de données binaires pouvant prendre la valeur 0 ou 1, le choix de la modification δm à appliquer pourra se faire tel qu'indiqué dans la table suivante :

| Second flux de données d2 | Modification |
|---|---|
| {00} | δ1 |
| {01} | δ2 |
| {10} | δ3 |
| {11} | δ4 |

Il est à noter que rien n'exclut, dans des modes particuliers de mise en oeuvre, que l'une des modifications δm 1 ≤ m ≤ M) soit égale à zéro. Toutefois, cela requiert que la station 20 sache a priori que des données du second flux de données d2 sont émises. C'est par exemple le cas si des données du second flux de données d2 sont émises à chaque paquet de données Pn, ou uniquement avec les paquets de données Pn d'indice n égal à une valeur Np prédéfinie. Si la station 20 ne sait pas a priori quand des données du second flux de données d2 sont émises, il est nécessaire de prévoir des moyens de détecter la présence de telles données du second flux de données d2, par exemple en ne considérant que des modifications δm (1 ≤ m ≤ M) différentes de zéro. Dans un tel cas (modifications δm toutes différentes de zéro), la détection d'une modification de la fréquence centrale Fn est équivalente à la détection de la présence de données du second flux de données d2.

Le procédé 50 d'émission comporte ensuite une étape 54 d'émission du paquet de données Pn, translaté fréquentiellement autour de la nouvelle fréquence centrale F'n.

Dans l'exemple illustré par la figure 2, chaque saut de fréquence théorique est modifié pour émettre des données du second flux de données.

Rien n'exclut, suivant d'autres exemples non illustrés par des figures, de ne modifier qu'une partie du motif de saut de fréquence théorique, par exemple de ne modifier que des sauts de fréquence théoriques correspondant à des indices prédéfinis du motif de saut de fréquence théorique. Par exemple, il est possible de ne modifier que les sauts de fréquence théoriques pour les paquets de données Pn dont l'indice n est égal modulo N à une valeur Np prédéfinie connue de la station 20. Ainsi, la recherche de paquets de données dans la bande de multiplexage par la station 20 est facilitée car en dehors des cas où l'indice n est égal modulo N à Np, le motif de saut de fréquence théorique, connu de la station 20, n'est pas modifié.

La présente invention concerne également un procédé 60 de réception de données adapté à la réception du premier flux de données et du second flux de données émis conformément à un procédé 50 d'émission dont le principe général a été décrit ci-avant.

La station 20 du système de télécommunications numériques comporte à cet effet un ensemble de moyens logiciels et/ou matériels configurés pour recevoir des données conformément à un procédé 60 de réception dont un exemple de mise en oeuvre sera décrit ci-après.

Dans un mode préféré de réalisation, lesdits moyens, configurés pour recevoir des données émises par un terminal 10, se présentent sous la forme d'un module de réception analogique et d'un module de réception numérique.

Le module de réception analogique est adapté à recevoir un signal global correspondant à l'ensemble des signaux radioélectriques reçus dans la bande de multiplexage. Il comporte à cet effet un ensemble de moyens, considérés comme connus de l'homme de l'art (antennes, filtres analogiques, amplificateurs, oscillateurs locaux, mélangeurs, etc.).

Le module de réception analogique présente en sortie un signal analogique correspondant au signal global ramené autour d'une fréquence intermédiaire inférieure à la fréquence centrale de la bande de multiplexage, ladite fréquence intermédiaire pouvant être nulle.

Le module de réception numérique comporte, de manière conventionnelle, un ou plusieurs convertisseurs analogique/numérique (A/N) adaptés à échantillonner le ou les signaux analogiques fournis par le module de réception analogique de sorte à obtenir un signal numérique.

Le module de réception numérique comporte en outre un processeur et une mémoire électronique dans laquelle est mémorisé un produit programme d'ordinateur, sous la forme d'un ensemble d'instructions de code de programme qui, lorsqu'elles sont exécutées par le processeur, mettent en oeuvre tout ou partie des étapes d'un procédé 60 de réception de données à partir du signal numérique en sortie des convertisseurs A/N. Dans une variante, l'unité de traitement comporte des circuits logiques programmables, de type FPGA, PLD, etc., et/ou circuits intégrés spécialisés (ASIC), adaptés à mettre en oeuvre tout ou partie des étapes dudit procédé 60 de réception de données.

La figure 3 représente un mode préféré de mise en oeuvre d'un procédé 60 de réception de données émises par le terminal 10, dont les principales étapes sont les suivantes :
- 61 recherche, dans la bande de multiplexage, de paquets de données émis par le terminal 10,
- 62 extraction du premier flux de données d1 à partir des paquets de données détectés,
- 63 mesure des bandes fréquentielles dans lesquelles des paquets de données ont été détectés,
- 64 extraction du second flux de données d2 en fonction des mesures des bandes fréquentielles dans lesquelles des paquets de données ont été détectés.

Par exemple, l'étape 61 de recherche comprend un calcul d'un spectre fréquentiel du signal numérique dans la bande de multiplexage, et la recherche de maxima locaux dans ledit spectre fréquentiel supérieurs à une valeur seuil de détection prédéfinie.

Dans l'exemple illustré par la figure 3, le paquet de données Pn est détecté par la station 20, et le premier flux de données d1 est ensuite extrait à partir dudit paquet de données Pn, de manière conventionnelle.

L'étape 63 de mesure des bandes fréquentielles dans lesquelles des paquets de données ont été détectés vise à estimer le motif de saut de fréquence utilisé par le terminal 10 pour émettre les paquets de données. Il est à noter que, dans le cas d'une recherche de maxima locaux du spectre fréquentiel du signal numérique dans la bande de multiplexage, la détection d'un paquet de données et la mesure de la bande fréquentielle dans laquelle ce paquet de données a été reçu sont sensiblement simultanées.

Dans l'exemple illustré par la figure 3, le paquet de données Pn a été détecté dans la bande fréquentielle de fréquence centrale F'n.

Le second flux de données d2 est ensuite extrait, cours de l'étape 64, en fonction des mesures de bandes fréquentielles dans lesquelles des paquets de données, c'est-à-dire en fonction de l'estimation du motif de saut fréquence utilisé par le terminal 10.

Tel qu'indiqué précédemment, on se place dans l'exemple illustré par la figure 3 dans le cas où un motif de saut de fréquence théorique est préalablement associé au terminal 10 ayant émis les paquets de données. Ledit motif de saut de fréquence théorique est par exemple préalablement mémorisé dans une mémoire électronique 21 de la station 20.

La station 20 pouvant recevoir des paquets de données de plusieurs terminaux 10, ladite station 20 mémorise par exemple plusieurs motifs de saut de fréquence théoriques associés respectivement aux différents terminaux 10 du système de télécommunications numériques.

Des moyens sont préférentiellement prévus pour permettre à ladite station 20 d'identifier le terminal 10 ayant émis les paquets de données. Dans un mode préféré de mise en oeuvre, illustré par la figure 3, chaque terminal 10 incorpore dans les paquets de données qu'il émet un code d'identification spécifique. De la sorte, la lecture par la station 20 du code d'identification incorporé dans un paquet de données lui permet de retrouver dans la mémoire électronique 21 le motif de saut de fréquence théorique associé au terminal 10 ayant émis ce paquet de données.

Il est à noter que d'autres moyens, considérés comme à la portée de l'homme de l'art, peuvent être mis en oeuvre pour permettre à la station 20 d'identifier le terminal 10 ayant émis les paquets de données. Suivant un autre exemple, l'instant d'émission d'un paquet de données est préalablement négocié par le terminal 10 avec la station 20, de sorte que l'instant de réception d'un paquet de données pourra permettre à la station 20 d'identifier le terminal 10 ayant émis ce paquet de données. Suivant un autre exemple, dans le cas d'un système de télécommunications numériques à accès multiple par répartition en code (connu sous le nom de « Code Division Multiple Access » ou CDMA dans la littérature anglo-saxonne), la détermination par la station 20 du code utilisé par un terminal 10 permettra d'identifier ce terminal 10.

Dans l'exemple illustré par la figure 3, un code d'identification Cid est extrait du paquet de données Pn, qui permet à la station 20 de retrouver dans la mémoire électronique 21 le motif de saut de fréquence théorique associé au terminal 10 ayant émis le paquet de données Pn.

Dans le mode particulier de mise en oeuvre illustré par la figure 2, on se place en outre de manière non limitative dans le cas où chaque terminal 10 incorpore dans un paquet de données émis un compteur qui est incrémenté à chaque nouvelle émission par ledit terminal.

L'extraction du compteur du paquet de données Pn reçu permet à la station 20 de déterminer l'indice n dudit paquet de données, et ainsi de déterminer, à partir du motif de saut de fréquence théorique, le saut de fréquence théorique prévu pour le paquet de données Pn, qui consiste en une translation fréquentielle autour de la fréquence centrale Fn.

Le second flux de données d2 est alors extrait au cours d'une étape 65 de comparaison du motif de saut de fréquence estimé par la station 20 avec le motif de saut de fréquence théorique associé au terminal 10, c'est-à-dire en comparant la bande fréquentielle mesurée F'n à la fréquence centrale Fn prévue par le motif de saut de fréquence théorique.

Dans l'exemple décrit ci-avant en référence à la figure 2, la station 20 évalue par exemple la différence (F'n - Fn) et la compare aux modifications δm (1 ≤ m ≤ M) prédéfinies possibles. Si la différence (F'n - Fn) est sensiblement égale à δ1 la station 20 considère que les données binaires {00} ont été émises, si la différence (F'n - Fn) est sensiblement égale à δ2 la station 20 considère que les données binaires {01} ont été émises, etc.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant qu'un motif de saut de fréquence théorique était associé à chaque terminal 10. Rien n'exclut, suivant d'autres exemples, de ne pas considérer de motif de saut fréquence théorique, le motif de saut de fréquence étant alors entièrement déterminé par le second flux de données. Toutefois, si des données du second flux de données ne sont pas émises avec chaque paquet de données du premier flux de données, aucun saut de fréquence ne sera effectué en l'absence de données du second flux de données. En considérant un motif de saut de fréquence théorique, un saut de fréquence est toujours effectué, ce qui permet de réduire, au niveau de la station 20, les collisions entre les paquets de données émis par les différents terminaux 10, mais également de bénéficier d'une plus grande diversité fréquentielle.

En outre, l'invention a été décrite en considérant que le motif de saut de fréquence théorique était modifié en modifiant un ou plusieurs sauts de fréquence théoriques. Rien n'exclut, suivant d'autres exemples, de modifier autrement le motif de saut de fréquence théorique, par exemple en supprimant certains sauts de fréquence théoriques, c'est-à-dire en poinçonnant ledit motif de saut de fréquence théorique.

En outre, il a été décrit ci-avant un exemple dans lequel les paquets de données incorporent un compteur incrémenté par le terminal 10 à chaque nouvelle émission. En pratique, une telle information permet de déterminer le saut de fréquence théorique prévu par le motif de saut de fréquence théorique, et est surtout nécessaire si des paquets de données peuvent être perdus, c'est-à-dire émis par un terminal 10 et non reçus par la station 20.

D'autres moyens permettant à la station 20 de déterminer le saut de fréquence théorique prévu par le motif de saut de fréquence théorique peuvent être prévus. Suivant un premier exemple non limitatif, si une partie des paquets de données est chiffrée avec une clé tournante incrémentée par le terminal 10 à chaque nouvelle émission, la station 20 peut incrémenter la clé tournante qu'elle utilise pour essayer de déchiffrer un paquet de données jusqu'à obtenir une clé tournante permettant de déchiffrer avec succès ledit paquet de données. L'incrément requis pour déchiffrer avec succès ledit paquet de données permet de déterminer le saut de fréquence théorique prévu par le motif de saut de fréquence théorique. Suivant un second exemple non limitatif, si les paquets de données sont émis par un terminal 10 avec une période prédéfinie, alors les instants de réception desdits paquets de données permet de déterminer le saut de fréquence théorique prévu par le motif de saut de fréquence théorique.

## Revendications

1. Procédé (50) d'émission de données par un terminal (10) à destination d'une station (20) d'un système de télécommunications numériques, **caractérisé en ce qu'**un premier flux de données est encodé dans des paquets de données et un second flux de données est encodé dans un motif de saut de fréquence, lesdits paquets de données, dans lesquels est encodé le premier flux de données, étant émis successivement dans des bandes fréquentielles respectives d'une ressource fréquentielle, lesdites bandes fréquentielles étant déterminées en fonction dudit motif de saut de fréquence dans lequel est encodé le second flux de données.

2. Procédé (50) d'émission selon la revendication 1, **caractérisé en ce que**, un motif de saut de fréquence théorique étant associé au terminal, le second flux de données est encodé sous la forme d'une modification dudit motif de saut de fréquence théorique.

3. Procédé (50) d'émission selon la revendication 2, **caractérisé en ce que** la modification du motif de saut de fréquence théorique, pour encoder le second flux de données, comprend la modification ou la suppression d'au moins un saut de fréquence théorique dudit motif de saut de fréquence théorique.

4. Procédé (50) d'émission selon la revendication 3, **caractérisé en ce que** seuls des sauts de fréquence théoriques correspondant à des indices prédéfinis du motif de saut de fréquence théorique sont modifiés ou supprimés pour encoder le second flux de données.

5. Terminal (10) d'un système de télécommunications numériques, **caractérisé en ce qu'**il comporte des moyens configurés pour émettre des données à destination d'une station (20) conformément à un procédé (50) d'émission selon l'une des revendications 1 à 4.

6. Procédé (60) de réception, par une station (20) d'un système de télécommunications numériques, de données émises par un terminal (10) conformément à un procédé (50) d'émission selon l'une des revendications 1 à 4, **caractérisé en ce qu'**il comporte des étapes de :
- (61) recherche, dans la ressource fréquentielle, de paquets de données émis par le terminal (10),
- (62) extraction du premier flux de données à partir des paquets de données détectés,
- (63) mesure des bandes fréquentielles dans lesquelles des paquets de données ont été détectés,
- (64) extraction du second flux de données en fonction des mesures des bandes fréquentielles dans lesquelles des paquets de données ont été détectés.

7. Procédé (60) de réception selon la revendication 6, **caractérisé en ce que** l'étape (64) d'extraction du second flux de données comporte la comparaison des mesures des bandes fréquentielles dans lesquelles des paquets de données ont été détectés à un motif de saut de fréquence théorique associé audit terminal (10).

8. Procédé (60) de réception selon l'une des revendications 6 à 7, **caractérisé en ce que**, les paquets de données incorporant un compteur incrémenté par le terminal (10) à chaque nouvelle émission, le second flux de données est extrait en outre en fonction des compteurs desdits paquets de données.

9. Procédé (60) de réception selon l'une des revendications 6 à 7, **caractérisé en ce que**, les paquets de données comportant une partie chiffrée au moyen d'une clé tournante incrémentée par le terminal (10) à chaque nouvelle émission, le second flux de données est extrait en outre en fonction des clés tournantes utilisées pour chiffrer lesdits paquets de données.

10. Station (20) d'un système de télécommunications numériques, **caractérisée en ce qu'**elle comporte des moyens configurés pour recevoir des données d'un terminal (10) conformément à un procédé (60) de réception selon l'une des revendications 6 à 9.

## Patentansprüche

1. Verfahren (50) zum Senden von Daten von einem Endgerät (10) an eine Station (20) eines digitalen Telekommunikationssystems, **dadurch gekennzeichnet, dass** ein erster Datenstrom in Datenpaketen codiert und ein zweiter Datenstrom in einem Frequenzsprungmuster codiert ist, wobei die Datenpakete, in denen der erste Datenstrom codiert ist, nacheinander in jeweiligen Frequenzbändern einer Frequenzressource gesendet werden, wobei die Frequenzbänder abhängig von dem Frequenzsprungmuster bestimmt werden, in dem der zweite Datenstrom codiert ist.

2. Sendeverfahren (50) nach Anspruch 1, **dadurch gekennzeichnet, dass**, da dem Endgerät ein theoretisches Frequenzsprungmuster zugeordnet ist, der zweite Datenstrom in Form einer Änderung des theoretischen Frequenzsprungmusters codiert wird.

3. Sendeverfahren (50) nach Anspruch 2, **dadurch gekennzeichnet, dass** die Änderung des theoretischen Frequenzsprungmusters, um den zweiten Datenstrom zu codieren, die Änderung oder die Unterdrückung mindestens eines theoretischen Frequenzsprungs des theoretischen Frequenzsprungmusters enthält.

4. Sendeverfahren (50) nach Anspruch 3, **dadurch gekennzeichnet, dass** nur theoretische Frequenzsprünge, die vordefinierten Indices des theoretischen Frequenzsprungmusters entsprechen, geändert oder unterdrückt werden, um den zweiten Datenstrom zu codieren.

5. Endgerät (10) eines digitalen Telekommunikationssystems, **dadurch gekennzeichnet, dass** es Einrichtungen aufweist, die konfiguriert sind, Daten gemäß einem Sendeverfahren (50) nach einem der Ansprüche 1 bis 4 an eine Station (20) zu senden.

6. Verfahren (60) zum Empfang, durch eine Station (20) eines digitalen Telekommunikationssystems, von von einem Endgerät (10) gemäß einem Sendeverfahren (50) nach einem der Ansprüche 1 bis 4 gesendeten Daten, **dadurch gekennzeichnet, dass** es Schritte aufweist:
- (61) der Suche, in der Frequenzressource, nach vom Endgerät (10) gesendeten Datenpaketen,
- (62) der Entnahme des ersten Datenstroms ausgehend von den erfassten Datenpaketen,
- (63) der Messung der Frequenzbänder, in denen Datenpakete erfasst wurden,
- (64) der Entnahme des zweiten Datenstroms abhängig von den Messwerten der Frequenzbänder, in denen Datenpakete erfasst wurden.

7. Empfangsverfahren (60) nach Anspruch 6, **dadurch gekennzeichnet, dass** der Schritt (64) der Entnahme des zweiten Datenstroms den Vergleich der Messwerte der Frequenzbänder, in denen Datenpakete erfasst wurden, mit einem theoretischen Frequenzsprungmuster aufweist, das dem Endgerät (10) zugeordnet ist.

8. Empfangsverfahren (60) nach einem der Ansprüche 6 bis 7, **dadurch gekennzeichnet, dass**, da die Datenpakete einen Zähler enthalten, der bei jedem neuen Sendevorgang vom Endgerät (10) inkrementiert wird, der zweite Datenstrom außerdem abhängig von den Zählern der Datenpakete entnommen wird.

9. Empfangsverfahren (60) nach einem der Ansprüche 6 bis 7, **dadurch gekennzeichnet, dass**, da die Datenpakete einen mittels eines bei jedem neuen Sendevorgang vom Endgerät (10) inkrementierten rotierenden Schlüssels verschlüsselten Teil aufweisen, der zweite Datenstrom außerdem abhängig von den rotierenden Schlüsseln entnommen wird, die verwendet werden, um die Datenpakete zu verschlüsseln.

10. Station (20) eines digitalen Telekommunikationssystems, **dadurch gekennzeichnet, dass** sie Einrichtungen aufweist, die konfiguriert sind, Daten gemäß einem Empfangsverfahren (60) nach einem der Ansprüche 6 bis 9 von einem Endgerät (10) zu empfangen.

## Claims

1. A method (50) for transmitting data by a terminal (10) to a station (20) of a digital telecommunications system, **characterized in that** a first data stream is encoded in data packets and a second data stream is encoded in a frequency-hopping pattern, said data packets, in which the first data stream is encoded, being consecutively transmitted in respective frequency bands of a frequency resource, said frequency bands being determined according to said frequency-hopping pattern in which the second data stream is encoded.

2. The transmission method (50) as claimed in claim 1, **characterized in that**, a theoretical frequency-hopping pattern being associated with the terminal, the second data stream is encoded in the form of a modification of said theoretical frequency-hopping pattern.

3. The transmission method (50) as claimed in claim 2, **characterized in that** the modification of the theoretical frequency-hopping pattern, to encode the second data stream, comprises the modification or the removal of at least one theoretical frequency hop from said theoretical frequency-hopping pattern.

4. The transmission method (50) as claimed in claim 3, **characterized in that** only theoretical frequency hops corresponding to predefined indices of the theoretical frequency-hopping pattern are modified or removed to encode the second data stream.

5. A terminal (10) of a digital telecommunications system, **characterized in that** it includes means configured to transmit data to a station (20) in accordance with a transmission method (50) as claimed in one of claims 1 to 4.

6. A method (60) for receiving, by a station (20) of a digital telecommunications system, data transmitted by a terminal (10) in accordance with a transmission method (50) as claimed in one of claims 1 to 4, **characterized in that** it includes the steps of:
- searching (61), in the frequency resource, for data packets transmitted by the terminal (10),
- extracting (62) the first data stream from the detected data packets,
- measuring (63) the frequency bands in which data packets have been detected,
- extracting (64) the second data stream according to the measurements of the frequency bands in which data packets have been detected.

7. The reception method (60) as claimed in claimed 6, **characterized in that** the step (64) of extracting the second data stream includes the comparison of the measurements of the frequency bands in which the data packets have been detected to a theoretical frequency-hopping pattern associated with said terminal (10).

8. The reception method (60) as claimed in one of claims 6 to 7, **characterized in that**, the data packets incorporating a counter incremented by the terminal (10) on each new transmission, the second data stream is furthermore extracted according to the counters of said data packets.

9. The reception method (60) as claimed in one of claims 6 to 7, **characterized in that**, the data packets including a part encrypted by means of a rolling key incremented by the terminal (10) at each new transmission, the second data stream is furthermore extracted according to the rolling keys used for encrypting said data packets.

10. A station (20) of a digital telecommunications system, **characterized in that** it includes means configured to receive data from a terminal (10) in accordance with a reception method (60) as claimed in one of claims 6 to 9.
